# EUROPEAN PATENT APPLICATION

(11) **EP 4 703 944 A1**
(43) Date of publication of application: **04.03.2026**
(21) Application number: 24306417.7
(22) Date of filing: 30.08.2024
(51) Int. Cl.: G06F 21/64, G06Q 10/0833, G06Q 30/018, H04L 9/00

(54) **A USER-CUSTOMIZABLE DECENTRALIZED TRACEABILITY SYSTEM TO GENERATE DIGITAL PRODUCT PASSPORT IN SUPPLY CHAIN, METHOD AND COMPUTER PROGRAM PRODUCT FOR THE SAME**

(71) Applicant: Commissariat à l'Energie Atomique et aux Energies Alternatives, 75015 Paris (FR)
(72) Inventor: ABDALLAH, Rouwaida, 91191 Gif-sur-Yvette Cedex (FR); TOYOS MARFURT, Guillermo, 91191 Gif-sur-Yvette Cedex (FR); TUCCI PIERGIOVAN, Sara, 91191 Gif-sur-Yvette Cedex (FR)
(74) Representative: Atout PI Laplace

(57) **Abstract**

A computer implemented method for providing digital product passport for traceability of a product throughout a supply chain, the supply chain involving a plurality of actors operating at different stages of the supply chain during a product lifecycle, the method comprising:
- deploying a documents smart contract and a certificates smart contract on a blockchain network each at a deployment address;
- issuing certificates to authorize actors interacting with the deployed documents and certificates smart contracts; and
- configuring user interfaces allowing each authorized actor managing through fractional non-fungible tokens F-NFTs digital instances of the product for operations realized by each said authorized actor, and building a metadata document with information on said digital instances and information on digital instances managed by other authorized actors, wherein the metadata document being notarized with a token identifier.

## Description

### Field of the Invention

The present invention relates to the field of digital communication. Particularly, the invention relates to digital traceability of products in supply chain.

### Background Art

Traceability, transparency, and sustainability efforts for industrial consumer goods are increasingly being pushed forward by institutions such as the European Union (EU). The objective is to promote sustainable economic practices, such as boosting the circular economy through more efficient recycling, reducing greenwashing, augmenting consumer awareness, and facilitating compliance verification throughout a product's supply chain.

Traceability poses a significant challenge in modern supply chain systems.

The article of Martin Westerkamp, Friedhelm Victor, and Axel Kupper "Blockchain-based supply chain traceability Token recipes model manufacturing processes" In 2018 IEEE International Conference on Internet of Things, pages 1595-1602, 2018, presents a blockchain based supply chain traceability system using tokens. In this solution, physical goods are represented using tokens (Non Fungible Tokens NFT) and recipes to enable their transformation (composition of goods). For each type of good, a smart contract is set up, tokens are created to represent instances/batches of goods. Smart contracts are computer programs designed to automatically execute actions according to the terms of a contract or agreement. In order to digitally project a manufacturing process, several tokens can be transformed into a new token. When creating a new smart contract, the product composition is defined. However, using a single smart contract for each product and setting a priori rules for defining their composition introduces high operational costs (due to the need to deploy a smart contract for each product, or a variation of it and the number of internal smart contract calls) and further leads to inflexibility to the system. In fact, clients need to define which smart contracts they will consume, and the number of NFTs to use for creating a product through the smart contract. Moreover, supply chain stakeholders need to model the whole supply chain through smart contracts and rules, wherein any chain to the former impacts the latter.

Patent WO2024052492A1 proposes a system using blockchain and NFTs where each asset is a NFT which holds a Uniform Resource Identifier (URI) which can be an Inter-Planetary File System (IPFS) content identifier (which is content immutable) allowing to preserve the integrity of the data. NFTs allow to record information about an asset and model the changes of ownership by transferring the NFT between parties. However, the system does not tackle how to model composed assets as there is no evident way of how to express relationships between NFTs.

A recent instrument for achieving the aforementioned objectives in advancing the circular and climate-neutral economy is the Digital Product Passport (DPP).

In EU, the Digital Product Passport is a key feature of the Eco-design for Sustainable Products Regulation (ESPR) initiative which will apply to a wide range of product categories including batteries, textiles, electronics, constructions products ...

A Digital Product Passport is a digital record that provides comprehensive information about a product and its entire value chain. This includes everything from the origin of the product, materials used, environmental impact, and disposal recommendations. DPPs' main purpose is to close the gap between the transparency demanded by consumers, investors, and other stakeholders and the current lack of reliable data on product journeys.

Generally, a DPP integrates information from all phases of the product's life cycle and is shared amongst supply chain businesses, authorities and consumers. A DDP is a verifiable document for a manufactured product, containing data regarding its composition, origin, material content, recycling instructions and general information.

Moreover, a DPP should aggregate information on how a product is built and relevant events associated with it throughout the entire manufacturing and retail process. Consequently, a DPP should facilitate the aggregation of data from each business process along a supply chain, enabling a trusted exchange of information between stakeholders. So, a DPP is inherently related to the supply chain with which it is associated, and the properties and requirements of a DPP system are thus directly related to the characteristics and nuances of the supply chain ecosystem.

Firstly, the supply chain consists of multiple stakeholders, each contributing information to the product and having distinct business processes. As a result, the data carried by a DPP is an aggregation of events and components that constitute the product throughout the supply chain. This inherently makes the DPP ecosystem distributed. In a centralized system, supply chain participants must rely on a single organization to store their valuable information, which then presents the risk of a single point of failure. For instance, traditional supply chain management systems often suffer from issues such as lack of transparency, inefficiencies and vulnerability to fraud. Moreover, a centralized system requires that all suppliers, manufacturers and retailers within a supply chain agree on uniform standards, a common information repository, and a single system. These systems are impractical and hinder the rapid adoption of DPPs.

Secondly, the supply chain is often characterized by a lack of cooperation and a competitive environment. Negotiations and information exchanges typically occur between individual pairs, and there is usually little to no direct interaction or trust among stakeholders at different stages of the supply chain. For example, a major issue in the clothing manufacturing supply chain is information asymmetry. Manufacturers often face difficulties in verifying the provenance of their materials due to the concealment of such information by intermediaries. Then a DPP system should be designed to acknowledge this reality, enabling parties to utilize the system, to aggregate and access data without compromising their interests while minimizing the reliance on trust in third parties.

Therefore, designing and providing an effective DPP system remains a significant challenge.

Further, in view of the aforementioned drawbacks of the existing methods, there is a need of an improved traceability solution.

The present invention offers a solution to this need with a system to generate and establish a DPP that facilitates the exchange of information among actors in a supply chain.

### Summary of the invention

An object of the present invention is a decentralized, customizable and customer-deployable DPP system that enables tracing a product life-cycle throughout a supply chain without relying on a central authority.

The DDP system of the present invention allows actors of a supply chain to easily join, leave, and exchange information without incurring significant system costs, without paying for a service - thereby avoiding reliance on a provider - nor depending on a centralized environment, to generate their DPPs and share them throughout the supply chain.

Another object of the present invention provides an IT infrastructure that enables the creation, maintenance, and use of DPPs, using blockchain smart contract technology and distributed file system.

To achieve verifiable traceability of supply chain documents within a decentralized framework, the present invention introduces a novel approach for designing DPP architectures, using Fractional Non-Fungible Tokens (F-NFTs) for the DPP assets and an event-driven system for their lifecycle management.

Advantageously, this approach facilitates the aggregation, exchange and access of information through a privacy-aware and trustless decentralized file system.

A first innovative feature of the system of the present invention relies on its design which allows for deployment, configuration and management directly by end users without the need for a solution provider. This user-centric approach offers unprecedented flexibility and independence compared to existing solutions.

Another innovative feature of the system of the present invention relies on the use of fractional NFTs, denoted F-NFTs. Assets are modeled as fractional NFTs, with an algorithm that establishes the relationship between the creation and consumption of tokens. The system also enables functionalities such as templating, certifications, verifiable credentials, a distributed file system, and an oracle network.

Yet another innovative feature relies on the use of a single smart contract hosting fractional tokens for blockchain notarization of digital assets (blockchain notarization being a tamper-proof method of authenticating digital assets and documents) and for defining their composition.

The DPP system of the present invention offers customizability. Digital assets are built on a meta-templating system, allowing users to define the semantic meaning of their digital assets. These templates can be shared among users using a distributed file system like IPFS.

Besides, by leveraging the following concepts, the decentralized traceability DPP system of the present invention is significantly enhanced and empowered:
- Ensure data exchange between stakeholders both public and private exchanges;
- Event tracking system;
- User friendly visualization;
- Notification system.

The DPP system represents a significant advancement in traceability systems, offering a decentralized, flexible, and user-managed solution that integrates cutting-edge blockchain technology and innovative asset management techniques.

Generally, the system of the present invention comprises three main functional modules:
- A Blockchain Module containing smart contracts to be deployed on a blockchain.
- A Certificate Generation Module dedicated to the management of the issuance of certificates, wherein only authorized actors can issue certificates, ensuring robust access management.
- A Client Module dedicated to users interaction with the overall system, pointing to a deployed smart contract and using access issued by a certifier.

To achieve the foregoing objects, a system, method and computer program product are provided in the appended claims.

Further aspects of the invention will now be described, by way of preferred implementation and examples, with reference to the accompanying figures.

### Brief description of the drawings

The above and other items, features and advantages of the invention will be better understood by reading the following more particular description of the invention in conjunction with the figures wherein:
Fig. 1 shows a general system environment for operating the present invention in an example of an electrical vehicle battery supply chain;
Fig. 2 is a block diagram of the main components of the digital product passport system of the present invention in an embodiment;
Fig. 3 is a flow chart of a general process for implementing a DPP system in accordance with an embodiment of the present invention;
Fig. 4 exemplifies a flow of asset tokenization for an EV battery in accordance with an embodiment of the present invention.

### Detailed description of the invention

In the context of the present invention, the followings terms may be used throughout the description as defined:
- Asset or Product: A tangible (e.g. a lithium battery, a car, mineral ore, etc.) or intangible object (software module, virtual objects, computer files, etc.). Products may be assembled, packaged combined, or be composed of multiple parts (for instance, a car is composed of wheels, an engine, etc.) can be derived from other products due to a manufacturing process (a battery may composed of multiple materials) or not (a raw material like wood planks may not derived from another product).
- Instance: A concrete realization of an asset or token. A Digital Product Passport instance is a virtual file that represents the DPP of a product, and comprises documents and associated metadata for interpretation. An entire instance is notarized on the blockchain, ensuring traceability and immutability. A token instance is the virtual record of the existence of a token.
- Actors: An individual or a group of individuals of one or several entities. For example, an actor may be a consumer of a product, a user who uses a product, manufacturers, a recycling company, logistics operators, etc. Actors in a supply chain of a product may be any individual or any group who interact with the product.
- Stakeholders: A stakeholder may be considered as any actor which actively participates in the supply chain of the product. The idea is to differentiate manufacturers, logistic operators, certifiers, retailers from an end user which only requires to "visualize information" but not "append information" to the supply chain.
- Supply Chain: A logistic chain comprising one or several actors, involving processes and technologies related to the life cycle of a product.
- Token supply: A total amount or number of token units created for a token family.
- Token family: A token or set of tokens which are all named with the same identification.
- Token asset: A token family that represents an asset. The term is usually used to denote what is the utility of the token, i.e. to virtually represent an asset.

The terms "token family" and "token asset" may also be referred as just "tokens". For instance, when it's said that "a token is created for a DPP instance" it may refer that a token family, with a certain quantity of supply is created, representing the file that realizes the DPP. The DPP represents an asset/product. The product may be batched or not.
- Instance tokenization: The process of creating a token family that represents an instance. It is similar to asset tokenization. Asset tokenization is the process of converting the value of a tangible or intangible asset into a digital token using blockchain technology.
- Batch: A set of objects. A quantity of goods produced at one time. It may refer to products that are not usually sold individually, such as raw materials which are arranged (batched) together in a single identifiable unit.
- Data carried by a DPP is an aggregation of events and components that constitute a product throughout a supply chain.

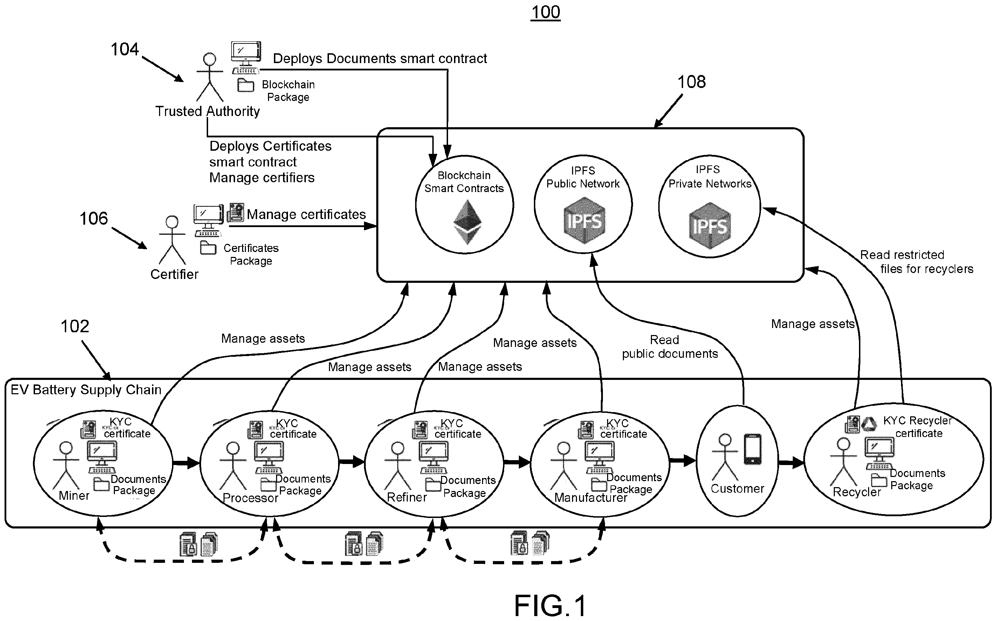

Going first to FIG. 1, a general system environment 100 for operating the present invention is illustrated. For illustration purposes only and not as a limitation, an exemplary case of circular economy is chosen for an electrical vehicle (EV) battery supply chain. However, it is to be appreciated that the concepts and principles of the present invention described may apply to different supply chains of various other products.

One knows that batteries are replaced periodically because they lose their ability to hold a charge over time, yet most of their materials remain valuable and can be reused to manufacture new batteries. Currently, battery manufacturing underutilizes these waste materials, many of which are considered critical raw materials, relying instead on traditional sourcing methods like mining. So, a current problem is that batteries cannot be effectively recycled due to the lack of information available to recycling facilities. If each battery could be traced and relevant recyclability information provided, such as material composition, status, and use of recycled components, the battery manufacturing industry could significantly benefit from reusing battery materials for manufacturing new batteries.

The DPP system of the present invention is customizable for providing a digital product passport DPP for traceability of EV batteries.

The DPP system 100 distinguishes at least three main entities with different roles:
- A trusted authority 104. It is the actor which deploys (i.e. through a trusted authority computer device which is configured to allow the functions) an instance of the certificate smart contract and the document smart contract which the supply chain stakeholders agree upon using them.

In an alternate embodiment, the deployment of documents smart contracts may be handled by a different authority, i.e. a supply chain deployer.

The trusted authority may further give an access to a certifier to be able to interact with the certificates smart contract.

The trusted authority may further act to communicate deployment addresses to all actors of the system so that they can configure their applications to interact correctly with deployed smart contracts.

The trusted authority may be one or several intervening users who agree (by voting) on the deployment of smart contracts and certifiers, also known as Decentralized Autonomous Organization (DAO). The trusted authority is unique and reliable.
- A certifier 106 who is responsible for managing certificates and generating access for the system users through certificates.

There can be one or multiple certifiers responsible for issuing other types of certificates (such as certification of compliance with ISO normalizations). For instance a laboratory can be a certifier only authorized to emit lab test certificates to DPP tokens.

The certifier 106 may be responsible to deploy a certification smart contract. In this case he gives himself the right to manage certificates (as the one who deploys is the one that can give access to authorize actors to be certifiers).
- System users or stakeholders as defined in the supply chain 102. These users must first be authorized to use the system by a certifier. Then by configuring a user interface on the client-side with the address of the deployed smart contracts, the system users can begin using the system.

In the example, the EV battery supply chain 102 consists of multiple stakeholders operating at different stages, such as miner(s), processor(s), refiner(s), manufacturer(s), customer(s), recycler(s), who communicate and participate in various business steps, each contributing information to the product (i.e. EV battery) and having distinct business processes, such as material extraction, manufacturing, distribution, usage, post-life treatment or product recycling.

In an implementation, the smart contracts are deployed on an "Ethereum" network, i.e. in an Ethereum Virtual Machine (EVM) compatible blockchain.

Advantageously, the implementation of a DPP system according the concepts of the present invention is agnostic to the programming language or the blockchain.

In a preferred embodiment, the DPP system is implemented as a decentralized application architecture. A set of smart contracts enables synchronization and communication between users, a server services a Web Application (Web App) which uses a cryptographic wallet to manage the credentials to communicate with the smart contracts deployed in a blockchain network. Data is shared across users using a Distributed File System (DFS).

A DFS is a decentralized network protocol that enables the storing, sharing and accessing of files across multiple nodes without relying on a central server. The synergy between blockchain and DFS offers a robust solution for efficient data management in decentralized environments. Blockchain excels at storing metadata and transaction records, while DFS manages larger data files, creating a complementary system. This integration enhances data integrity and traceability by maintaining a verifiable history of file system changes on the blockchain. Consequently, DFS is an optimal choice as a data layer in decentralized applications.

Advantageously, the decentralized architecture network 110 of the present invention further provides data communication between users, both as public exchanges or as private exchanges. As illustrated on figure 1, in a preferred embodiment such public or private exchanges are based on an Inter-Planetary File System (IPFS).

IPFS provides a suite of protocols and implementations to deploy a self-verifiable content addressable distributed file system. Each user hosts an IPFS node which stores documents according to a pinning policy of the system. For a public IPFS network, connectivity between nodes is provided by the protocol. In case of using a private IPFS network, the users only need to add a network node's URL to their local node configuration to ensure their interconnectivity.

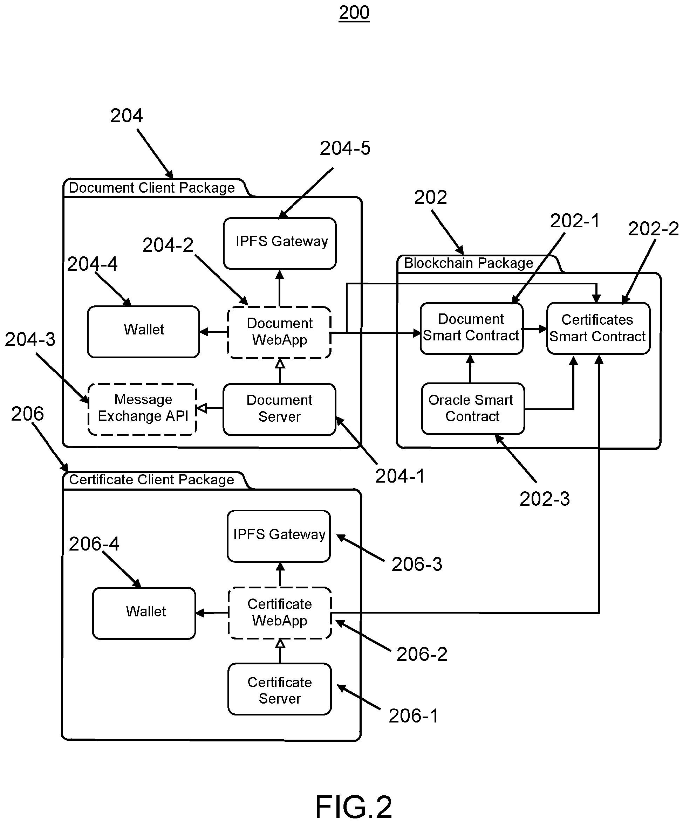

Going now to figure 2, a block diagram of the main components of a DPP system of the present invention is shown. In an embodiment, the DPP system 200 comprises a Blockchain module 202, a Document Client module 204 and a Certificate Client module 206. Dashed boxes illustrate components that are hosted by a server.

The Blockchain module 202 is configured as a Blockchain package to manage a Documents smart contract component 202-1 and a Certificates smart contract component 202-2 which are responsible of asset tokenization and of generating verified credentials for assets and for blockchain addresses. The Documents smart contract and the Certificates smart contract are deployed on a blockchain network by a trusted authority which manages access to certifiers to issue verifiable credentials.

The Documents smart contract component is operationally coupled to the Certificates smart contract component to verify if users are authorized or not to notarize assets.

In an embodiment, an "Oracle" smart contract component 202-3 may be implemented as part of the blockchain module to automatize the asset and certificate creation.

The use of Oracle enables the automation of certificate issuance based on information already notarized in the DPP system, facilitating trust and enabling more complex interactions. For example, automation could involve Artificial Intelligence (Al) systems analyzing notarized documents to verify if the traceability token composition of a product's DPP is valid and adheres to specific policies. Automating these businesses processes is crucial because manually verifying all uploaded information in the system for integrity would be impractical.

However, a challenge remains in ensuring the validity of the content that actors notarize in the blockchain. Oracle serves as entry points for writing information into the blockchain, requiring users to trust that the information they write is accurate.

One approach to mitigate this trust issue is the use of a Decentralized Oracle Network (DON). A DON consists of multiple oracles that collectively perform computations over notarized data and reach consensus on what to write on the blockchain. Trust is distributed among the network, reducing reliance on any single oracle agent.

In the DPP system of the present invention, an Oracle smart contract acts as an interface to the DON network and can be optionally deployed by smart contract owners i.e. trusted authority, who desire this functionality. Using a DON, a program can be submitted to the network and executed with notarized inputs (obtained from the IPFS network, which is self-verifiable). The result of this computation can then be notarized in the DPP system as a certificate or token. Advantageously, the program itself can also be notarized, allowing users to execute the program with the same inputs to verify the integrity of the result if necessary. This embodiment requires that the program is a deterministic one.

An example of a workflow for automatic certificate issuance is the following:
First, an authorized user notarizes a function *f* along with its source code and establishes a mapping between the function and a certificate code in the Certificate smart contract.

Next, a certifier requests the DON to generate a certificate for the specified code associated with a token *t_{id}* or address.

Then, the DON executes the function *f(t_{id})*, and based on the result, issues a certificate for *t_{id}* containing the evaluated result.

The Document Client module 204 is configures as a Document Client package that is to be installed by each actor in the supply chain. It is mainly composed of a Document server 204-1 which deploys a Document Web Application 204-2, an API 204-3, a digital Wallet 204-4 and a Gateway 204-5 (DFS / IPFS).

The Document Web App serves as an interface for a user to interact with the Documents smart contract component 202-1 and to visualize data in the system. To connect with the blockchain network, the Document Web App uses the Wallet 204-4 to manage the access keys to interact with the Documents smart contract and document signing. For the data layer, the Document Web App interacts with the Gateway 204-5 which allows download and upload of information, further allowing to load traceability events which are processed and to trigger the creation and consumption of token assets.

The Document server 204-1 also hosts an API 204-3 used for messaging and securely exchanging documents between users.

The Gateway 204-5 comprises a DFS node which stores the application information and which communicates with the DFS nodes of other users. The Gateway further provides an access control mechanism which uses the user's address and implements a permission mechanism for accessing documents.

The Certificate Client module 206 is used as a Certificate Client package that each actor which is bound to issue certificates in the system must install. It is mainly composed of a Certificate server 206-1, a Certificate Web Application 206-2, a Gateway 206-3 (DFS / IPFS) and a digital Wallet 206-4.

The Certificate Web App 206-2 provides an interface for interacting with the Certificates smart contract component 202-2, allowing issuing and visualizing certificates in the DPP system.

Users who want to generate DPPs may install the Document Client package 204 and configure it to connect with the appropriate addresses of the Documents smart contract and the Certificates smart contract, and connect it with the cryptographic wallet which contains the appropriate credentials to interact with the Documents smart contract.

Users who want to issue certificates may install the Certificate Client package 206 and connect it to the Certificates smart contract which they have access to interact with.

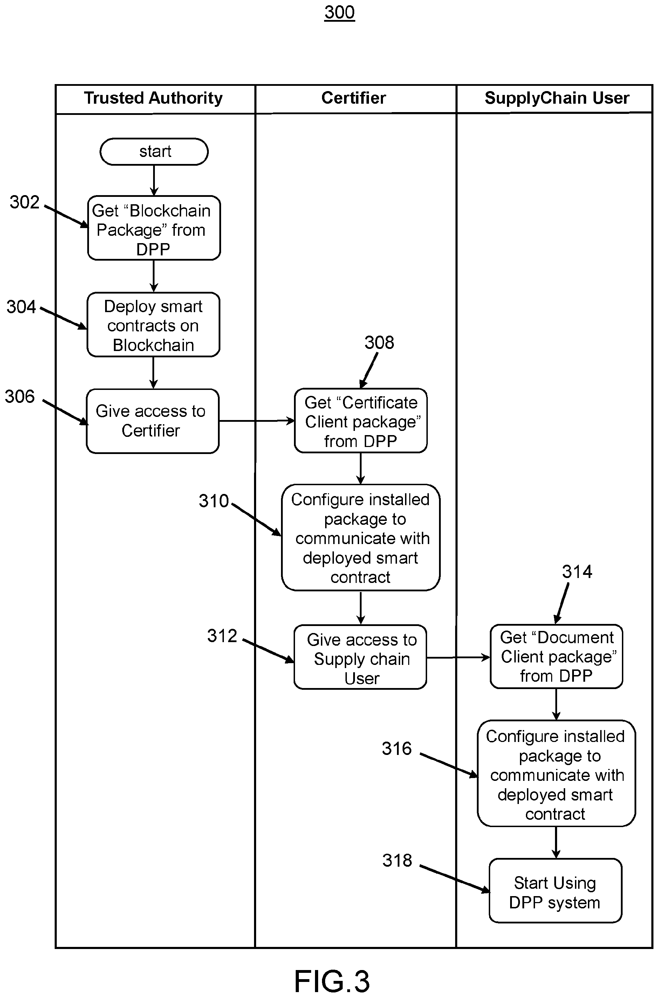

Figure 3 is a flow chart of a general process for deploying a DPP system in accordance with an embodiment of the present invention.

The process 300 starts with several steps (302, 304, 306) operated by a trusted authority (i.e. operated at a trusted authority computer), then pursues with several steps (308, 310, 312) operated by a Certifier (i.e. operated at a certifier computer), and ends with several steps (314, 316, 318) operated by authorized user(s) of the supply chain (i.e. operated at a user computer).

The steps operated by the trusted authority consist in:
302: downloading a Blockchain package comprising a Documents smart contract and a Certificates smart contract;
304: deploying the Documents smart contract and the Certificates smart contract on a blockchain; communicating the deployment address;
306: giving access to a Certifier.

The steps operated by the Certifier consist in:
308: obtaining and installing a Certificate Client package;
304: configuring the Certificate Client package to allow communication with the deployed smart contracts;
306: providing authorized access to supply chain user(s) through certificates.

The steps operated by a supply chain authorized user consist in:
314: obtaining and installing a Document Client package;
316: configuring the Document Client package to allow communication with the deployed smart contracts;
318: starting managing a DPP: visualize existing tokenized DPP instances, input notarization events, and tokenize new assets via fractional NFTs.

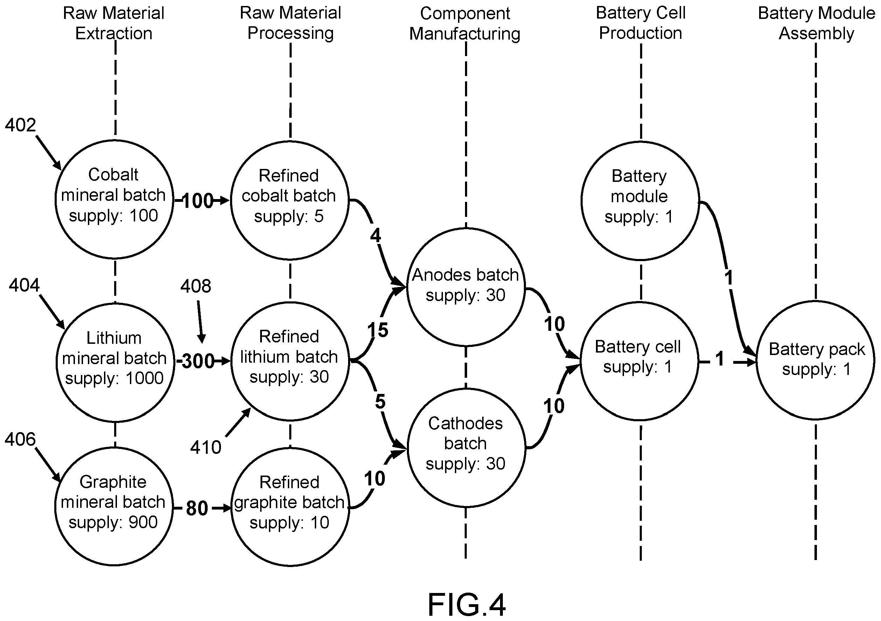

Figure 4 exemplifies a flow of asset tokenization for an EV battery supply chain, in accordance with an embodiment of the present invention.

In the example, the different operations in the supply chain are limited for simplification purposes only, to a raw material extraction, a raw material processing, a component manufacturing, a battery cell production and a battery module assembly.

Each circle represents a node with a token identifier t_{id} and indicates a total supply created (i.e. a quantity of tokens) by one or several users. For example, at the raw material extraction, it is defined:
- 402: a token identifier for a Cobalt mineral batch with a supply of 100;
- 404: a token identifier for a Lithium mineral batch with a supply of 1000;
- 406: a token identifier for a Graphite mineral batch with a supply of 900.

An edge from one starting circle of a stage of the supply chain to an arriving circle of a next stage indicates a quantity of tokens of the starting circle burned to create a token of the arriving circle. For example, an edge 408 with a label '*b*=300' from starting circle 404 at the raw material extraction to arriving circle 410 at the raw material processing, means that 300 tokens *t* of the Lithium mineral batch (defining a supply of 1000) were burned to create a supply of 30 tokens *t'* of the refined Lithium batch 410.

Advantageously, each user of a supply chain is able to create a number of tokens corresponding to the assets at the corresponding stage of the chain, through the user interface.

In this example, the first stage of the chain is a raw material extraction which can be done by one or several miners. The one or several miners create through the DDP user interface a number of tokens (402, 404, 406) for the quantity of raw material extracted, and provide data for each token.

The skilled person would not limit the principles described as this example but would generalize these to any number of users at each stage and number of tokens created by each user.

This example only shows relationships between tokens through several stages of the chain. As such at the beginning of the chain, 3 tokens are created (402, 404, 406) but it is not limited to the creation by only one miners. The same applies to any other stages of the chain.

The system allows for fully customizable digital product passports, powered by asset tokenization. Customization is achieved by defining a "template" that specifies the structure of an instance, specifying the documents and metadata it contains, and how their content should be interpreted. Instances are created based on these templates and notarized on the blockchain. Instances can be composed of other instances, enabling complex product structures. Additionally, instances can be transferred between users, with the quantity represented by the tokens used in the transfer.

In an embodiment, a template is a JSON document containing key-value pairs for each field and its description. Examples of fields for defining an instance may be:
- a "Recycling Process" field to describe a recycling process undergone by a product;
- a "Recycling Date" field to define a date when a product was recycled;
- a "Maximal Voltage" field to define a maximum voltage supported by a product;
- a "Nominal Voltage" field to define a nominal voltage for a product.

The DDP system allows a user creating a data structure as a template and filling it out this template for each token. Additionally, a user may also attach several files that are considered useful for the created tokens.

The user interface allows the user managing different functionality of the template, such as to view, to download, or to remove existing templates.

Tokens can be split or merged, leading to new types of tokens. Tokens can also change owners. The example of figure 4 shows how tokens move from one stage of an EV battery supply chain to another.

From the persisted information, one can construct a weighted acyclic directed graph (DAG) with weights on both nodes and edges. Each node represents a token and its weight is the minted supply. An edge exists between two nodes if one token has been burned to mint the other, with the edge weight representing the amount used. This graph illustrates the transformation of a product component throughout the supply chain, showing which instances were used to create it and to which other instances it has contributed.

Moreover, as instances of a product are tokenized, they can be transferred from one user to another, thereby allowing the construction of a DAG for tracing ownership details.

Advantageously, the user interface offers a user-friendly graph visualization of instances created, of instance composition, of instance transaction, of events associated with an instance, of protected files associated with an instance The notarization process of the present invention involves recording only the identifier of an instance rather than the full asset information, as writing data directly into the blockchain would incur prohibitively high gas costs.

In an embodiment, the instance identifiers are unique content identifiers obtained using a self-verifiable content addressable system such as IPFS.

In a preferred embodiment, the following steps are performed to tokenize an asset (or an instance):
- First operation relies on a document upload: each document associated with an asset is uploaded to the DFS. For each document, a unique content identifier (CID) is returned which allows retrieving the document in the DFS. One of the files to upload may be an embodiment of a template file.
- Next operation relies on a meta-document creation: all desired attributes and previously uploaded files's CID, and existing tokenized assets and documents in the system CIDs are aggregated into a single meta-document file.
- Next operation relies on a meta-document upload: the meta-document previously created is uploaded to the DFS, which returns a meta-document CID to address it in the DFS.
- Next operation relies on the meta-document notarization: the meta-document CID serves as a token identifier for the asset tokenization.

A content identifier or CID is a label used to address a file in IPFS. It doesn't indicate where the content is stored, but it forms a kind of address based on the content itself. CIDs are short regardless of the size of their underlying content as they are based on the content's cryptographic hash. Therefore, any difference in the content will yield a different CID, and the same content managed by two different IPFS nodes with the same configuration will yield the same CID.

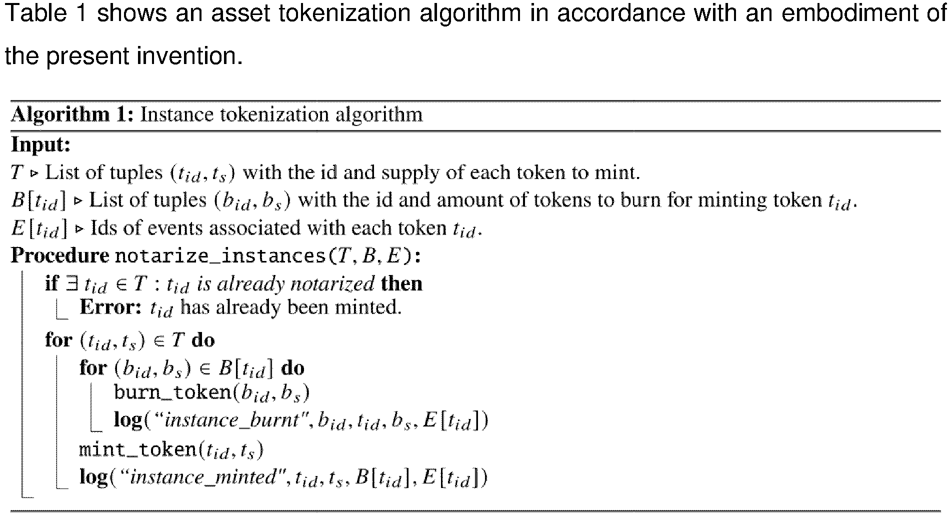

The asset tokenization algorithm takes three arguments:
T: a list of tuples (t_{id}, tₛ), each with an identifier t_{id} and a respective supply tₛ for each token to mint;
B[t_{id}]: a list of tuples (b_{id}, bₛ), each for an existing token to destroy with the respective identifier b_{id} and amount of instance to burn to associate with the mint of token t_id;
E[t_{id}]: represents an event to associate with each newly minted token t_{id}. Such event may represent transformations, aggregations, associations, transactions, or object events. The events are notarized on the blockchain, providing a comprehensive record of the product's lifecycle and offering visibility into the supply chain structure. The event data includes the event type, the event time, the event location, the event data, the input instances, the output instances, the parties involved, and any associated files.

The "mint_token" function records the token identifier ID and the amount, in the smart contract, assigning it to the transaction requester's address.

Conversely, the "burn_token" function removes a specified amount of a token ID from the requester's balance, in the smart contract.

The smart contract has two key characteristics: Firstly, tokens with a previously created ID cannot be created again. Therefore, the supply defined during token creation is definitive, and no additional tokens with the same ID can be issued. This characteristic introduces digital scarcity.

Secondly, the "burn_token" function requires the requester or invoker to possess at least the amount of tokens intended for burning. Consequently, to create a new token, an invoker must own all the tokens he wishes to consume.

When tokens are burned and minted, log operations are triggered, persisting then the information. An event is logged when tokens are consumed, detailing the token used, the quantity burned, the new token ID to be minted, and an associated event ID. Similarly, a log is created for newly minted tokens, including the token ID, the supply, any associated event ID, and the tokens used for minting. These logs ensure the traceability of tokens throughout the smart contract's life cycle. For a given token ID, the log operation can be used to identify the new tokens for which it has been burned, and it can be trace all tokens used to mint a specific token. Additionally, one can review all burn and mint operations associated with a particular event.

The DPP system of the present invention offers a significant advantage in solving the following three challenges in supply chain traceability:
(1) The Mass Balance Problem. This issue arises when quantities of products are not correctly accounted for when determining their properties, for instance, claiming that a product is made of sustainable materials when only 1% of it comes from sustainable sources. By introducing token scarcity with F-NFTs, component quantities used in compositions are transparently modeled. Manufacturers have to indicate the amount of resources used to manufacture a product and the resulting output quantities of the process. This approach significantly reduces the possibility of forging DPPs with misleading component information and composition. For example, if a miner creates a batch of 1000 kg of raw ore and tokenizes the DPP with a supply of 1000 tokens by adding a correspondence between the token supply and the physical quantity of the product (meaning 1 token = 1 kg), it will be reliably registered what each kg of ore is used for. To maintain traceability, the user creates a new token for the processed ore batch, composing it with the tokens of the raw ore. The amount depends on how much ore was consumed to obtain the total batch supply of the refined ore. This process allows for trusted verifiability of the system and minimizing trust between parties. Current traceability solutions cannot address this problem reliably, as the closest solutions at most allow associating an NFT with another by writing the ID of the former in the content of the latter. This can be done without restriction, without taking into account the already existing associations and claims, hindering traceability.
(2) The Anti-Counterfeiting challenge. For manufactured products, the DPP is a composition of tokenized assets. Since a single user does not typically control the entire supply chain, creating counterfeit DPPs becomes difficult. This is because the user would need to obtain valid tokens from the previous actors in the supply chain, making it challenging to forge a legitimate DPP. Compared to existing solutions, the DPP system of the present invention makes this even more difficult as F-NFT supply cannot be extended after the first minting, and there is a need to be transactions between users in order to have enough balance of F-NFT tokens to make the desired composition.
(3) The customer-deployment challenge. The DPP system of the present invention may be deployed on any smart contract-capable blockchain platform by a trusted authority agreed upon the supply chain stakeholders. There is no need to rely on an external service, centralized authority, or existing smart contracts to deploy the system. This contrasts with existing DPP solutions, which often provide pay-per-use services or centralized smart contracts that users need to subscribe to and potentially pay usage fees for.

Advantageously, each supply chain has to agree on smart contract instances where assets are going to be notarized and certificates to be issue. That doesn't deter to other smart contract instances to be deployed by a different supply chain or a different use case scenario. Stakeholders have to configure the documents package to be able to interact with the deployed smart contract, provided they have been already authorized to use it.

Then, it is to be appreciated that the method has been described with reference to a simplified example for a better understanding of the concepts and principles of the invention. However, the example is not a limitation and may allow a skilled person to apply modifications and implement various embodiments while maintaining the same scope of the invention as defined by the claims.

The beneficial characteristics involve user autonomy and tokenizing a digital asset into fractional tokens using an algorithm that consumes asset tokens to generate new ones. When deployed as a smart contract on a blockchain, the algorithm enables a transparent and reliable decentralized tracing system. The DDP system can be used as a methodology for product aggregation in supply chain contexts, systematically collecting information to create digital product passports in a decentralized and reliable manner. The life-cycle of assets is driven by traceability events following an interoperable format, which facilitates the integration and use of the system.

Further, the DPP system of the present invention provides a secure document exchange platform that enables users to request documents between them and manage access to protected files through the creation of groups and definition of involved parties. All interactions are secure and properly notarized on the blockchain, ensuring a tamper-proof record of all interactions.

To create a group, a user provides through the interface, a label for the group, a description, and a list of addresses to include in the group. The interface allows users to securely request documents from another party, to view requests made by other parties targeted to them, and to reply to the requests.

The present invention may be a method and/or a computer program product at any possible technical detail level of integration. The computer program product may include a computer readable storage medium (or media) having non transitory computer readable program instructions thereon for causing a processor to carry out aspects of the present invention. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing.

## Claims

1. A computer implemented method for providing digital product passport for traceability of a product throughout a supply chain, the supply chain involving a plurality of actors operating at different stages of the supply chain during a product lifecycle, the method comprising:
- deploying a documents smart contract and a certificates smart contract on a blockchain network each at a deployment address;
- issuing certificates to authorize actors interacting with the deployed documents and certificates smart contracts; and
- configuring user interfaces allowing each authorized actor managing through fractional non-fungible tokens F-NFTs digital instances of the product for operations realized by each said authorized actor, and building a metadata document with information on said digital instances and information on digital instances managed by other authorized actors, wherein the metadata document being notarized with a token identifier.

2. The computer implemented method of claim 1 wherein the F-NFTs managing functionality comprises creating F-NFTs, minting F-NFTs, burning F-NFTs, merging F-NFTs, transferring F-NFTs or splitting F-NFTs.

3. The computer implemented method of claim 1 or 2 wherein configuring user interfaces further allowing each authorized actor obtaining a unique content identifier CID to define a token identifier.

4. The computer implemented method of claims 3 wherein the unique CID is obtained using a self-verifiable content addressable system.

5. The computer implemented method of claim 4 wherein the self-verifiable content addressable system is implemented by an InterPlanetary File system IPFS.

6. The computer implemented method of anyone of claims 1 to 5 wherein configuring user interfaces further allowing each authorized actor building a private metadata document with private information, the private metadata document being notarized with a private content identifier.

7. The computer implemented method of anyone of claims 1 to 6 wherein building a metadata document comprises:
- receiving a unique content identifier for each document associated with an asset;
- creating a meta-document with attributes and the content identifiers of each document;
- receiving a content identifier for the meta-document;
- using the meta-document content identifier as a token identifier for the asset tokenization.

8. A non-transitory computer-readable storage medium coupled to one or more computers and configured with instructions executable by the one or more computers to perform the method of any one of claims 1 to 7.

9. A digital product passport system for traceability of a product throughout a supply chain, the supply chain involving a plurality of actors operating at different stages of the supply chain during a product lifecycle, the system comprising :
one or more computers; and
one or more computer-readable memories coupled to the one or more computers and configured with instructions executable by the one or more computers to perform the method of any one of claims 1 to 7.

10. The system of claim 9 wherein a computer of the one or more computers is operated by a trusted authority for performing the step of deploying a documents smart contract and a certificates smart contract on a decentralized blockchain with a deployment address.

11. The system of claim 9 or 10 wherein a computer of the one or more computers is operated by one or several certifiers for performing the step of issuing certificates to authorize actors of the supply chain executing the certificates smart contract.

12. The system of anyone of claims 9 to 11 further comprising a Decentralized Oracle Network DON.

13. The system of anyone of claims 9 to 12 comprising means for providing digital product passport for traceability of electrical vehicle batteries.
